# EUROPÄISCHE PATENTANMELDUNG

(11) **EP 1 736 730 A1**
(43) Veröffentlichungstag der Anmeldung: **27.12.2006**
(21) Anmeldenummer: 06011355.2
(22) Anmeldetag: 01.06.2006
(51) Int. Cl.: G01B 11/25, G01S 17/89

(54) **Entfernungsmessvorrichtung und Verfahren zur Entfernungsmessung**

(30) Priorität: 21.06.2005 DE 10528570
(71) Anmelder: Diehl BGT Defence GmbH & Co.KG, 88662 Überlingen (DE)
(72) Erfinder: Barenz, Joachim, Dr., 88690 Uhldingen (DE); Tholl, Hans Dieter, Dr., 88690 Uhldingen (DE)
(74) Vertreter: Diehl Patentabteilung

(57) **Zusammenfassung**

Die Erfindung betrifft eine Entfemungsmessvorrichtung (2) mit einer Strahlungsquelle (4), einer Sendeoptik (6) zur Ausrichtung von Strahlung aus der Strahlungsquelle (4) in eine Objektszene (20), einem Detektor (16) und einer Steuereinheit (12), die zu einer Erzeugung eines Entfernungsbilds aus Signalen (22) des Detektors (16) vorgesehen ist, wobei das Entfernungsbild mehrere, jeweils unterschiedlichen Ausschnitten (18) der Objektszene (20) zugeordnete Bildelemente umfasst.

Es wird vorgeschlagen, dass die Entfernungsmessvorrichtung (2) ein schaltbares Auswahlmittel (8) aufweist, durch das die Strahlung aus der Strahlungsquelle (4) in einem schaltbar wechselbaren Muster (24a-d, 48) in die Objektszene (20) richtbar ist. Es kann mit einfachen Mitteln ein Entfernungsbild mit hoher Auflösung und hohem Signal-Rausch-Verhältnis erzeugt werden.

## Beschreibung

Die Erfindung geht insbesondere aus von einer Entfernungsmessvorrichtung mit einer Strahlungsquelle, einer Sendeoptik zur Ausrichtung von Strahlung aus der Strahlungsquelle in eine Objektszene, einem Detektor und einer Steuereinheit, die zu einer Erzeugung eines Entfernungsbilds aus Signalen des Detektors vorgesehen ist, wobei das Entfernungsbild mehrere, jeweils unterschiedlichen Ausschnitten der Objektszene zugeordnete Bildelemente umfasst.

Zur Messung von Entfernungen zu weit entfernten Objekten ist es bekannt, Laserstrahlung auf das Objekt zu richten, vom Objekt reflektierte Strahlung zu messen und durch ein Laufzeitmessverfahren dessen Entfernung zum Entfemungsmessgerät zu bestimmen. Soll ein zweidimensionales Entfernungsbild einer Objektszene erzeugt werden, wird im einfachsten Fall ein Laserstrahl über die Objektszene gescannt und die Objektszene Ausschnitt für Ausschnitt bezüglich ihrer Entfernung vermessen. Jeder Ausschnitt ergibt ein Bildelement bzw. Pixel eines zweidimensionalen Entfemungsbilds, wobei jedes Bildelement außer seiner zweidimensionalen Lage (x, y) zumindest eine Entfernungsinformation (r) umfasst. Soll das zweidimensionale Entfernungsbild sehr schnell erstellt werden, so kann die Objektszene auf einen Matrixdetektor abgebildet werden, dessen Detektorelemente jeweils eine eigene Auswerteelektronik zur Auswertung der Laufzeiten umfassen. Solche Geräte sind jedoch aufwendig und teuer und zudem großvolumig.

Es ist die Aufgabe der vorliegenden Erfindung, eine kompakte und einfache Entfernungsmessvorrichtung und ein mit einer einfachen Entfernungsmessvorrichtung durchführbares Verfahren zur Entfernungsmessung anzugeben.

Die auf die Entfernungsmessvorrichtung gerichtete Aufgabe wird durch eine Entfernungsmessvorrichtung der eingangs genannten Art gelöst, die erfindungsgemäß ein schaltbares Auswahlmittel umfasst, durch das die Strahlung aus der Strahlungsquelle in einem schaltbar wechselbaren Muster in die Objektszene richtbar ist. Es können Ausschnitte aus der Objektszene in gewünschten Mustern gleichzeitig beleuchtet und das von ihnen erhaltene Reflexsignal einem einfachen Detektor mit beispielsweise einem oder wenigen Detektorelementen zugeführt werden. Auf diese Weise kann eine große Objektszene mit einem einfachen Detektor abgetastet werden. Gewünschte Muster können dadurch realisiert werden, dass die Steuereinheit dazu vorgesehen ist, Strahlung aus der Strahlungsquelle durch entsprechende Schaltung des Auswahlmittels in einem wechselbaren Muster in die Objektszene zu richten.

Eine komplexe Signalauswertung kann besonders einfach durchgeführt werden, wenn der Detektor ein Einelementdetektor ist. So kann beispielsweise das Signal-Rausch-Verhältnis durch nichtlineare Filter, insbesondere Medianfilter, gesteigert werden. Zweckmäßigerweise ist die Steuereinheit zur Durchführung einer Pulsformanalyse vorgesehen, aus der die Tiefenausdehnung eines ermittelten Objekts innerhalb eines Ausschnitts der Objektszene erfasst werden kann. Eine weitere Verbesserung kann durch die Erkennung von Mehrfachreflexen in einem detektierten Signal realisiert werden. Dies ermöglicht einen Blick durch beispielsweise getarnte Objekte, da der von der Tarnung reflektierte Anteil von dem vom Ziel reflektierten Anteil getrennt werden kann.

In einer vorteilhaften Ausgestaltung der Erfindung ist das schaltbare Auswahlmittel ein digitales Spiegelgitter. Ein solches Spiegelgitter mit mehreren Spiegelelementen ist besonders schnell und einfach schaltbar. Zweckmäßigerweise sind die Spiegelelemente des Spiegelgitters einzeln schaltbar, wodurch ein hohe Vielfalt an erzielbaren Mustern erreicht werden kann. Die Spiegelelemente können einzeln durch die Steuereinheit zwischen beispielsweise zwei Stellungen hin und her geschaltet werden, wobei die Stellungen zweckmäßigerweise so ausgewählt sind, dass bei einer ersten Stellung auf ein Spiegelelement auftreffendes Licht aus der Strahlungsquelle in den zugeordneten Ausschnitt der Objektszene reflektiert wird und in einer zweiten Stellung das Licht nicht in den Ausschnitt - und insbesondere nicht in die Objektszene - reflektiert wird. Das Gitter kann eine beliebige Anordnung haben, beispielsweise eine rechtwinklige M x N-Anordnung oder eine Wabenanordnung.

In einer weiteren Ausgestaltung der Erfindung ist die Sendeoptik zur Verteilung der Strahlung aus der Strahlungsquelle gleichzeitig auf alle Auswahlelemente des Auswahlmittels vorgesehen. Hierdurch werden alle Auswahlelemente, beispielsweise auswählbar schaltbare Elemente, wie bewegliche Spiegelelemente, beleuchtet, und ein mechanisch bewegliches Element zur Beleuchtungsauswahl der Auswahlelemente kann entfallen.

In einer weiteren vorteilhaften Ausgestaltung der Erfindung ist die Steuereinheit zur Schaltung des Auswahlmittels derart vorgesehen, dass mehrere, jeweils einem Auswahlelement des Auswahlmittels zugeordnete Ausschnitte der Objektszene gleichzeitig von der Strahlungsquelle beleuchtet werden. Reflexe mehrerer gewählter Ausschnitte können als Gesamtsignal dem Detektor zugeführt werden, wodurch ein gutes Signal-Rausch-Verhältnis und mithin eine hohe Reichweite der Entfernungsmessvorrichtung erzielt werden können.

Vorteilhafterweise ist die Strahlung in eine veränderbare Anzahl von wählbaren Ausschnitten richtbar. Hierdurch kann ein Signal-Rausch-Verhältnis an vorliegende Gegebenheiten optimiert werden. Insbesondere ist die Steuereinheit dazu vorgesehen, die Anzahl der Ausschnitte der Objektszene in Abhängigkeit einer Eigenschaft des Entfernungsbilds einzustellen. Als Eigenschaft kann beispielsweise eine Signalstärke oder ein Signal-Rausch-Verhältnis dienen. Ist beispielsweise die Signalstärke eines reflektierenden Objekts schwach, kann ein Bereich mit vielen Ausschnitten gewählt werden, wodurch ein starkes Signal und somit eine hohe optische Reichweite der Entfernungsmessvorrichtung erzielbar ist.

Es wird außerdem vorgeschlagen, dass die Steuereinheit dazu vorgesehen ist, die Ausschnitte in Mustern zu schalten, die sich teilweise überdecken. Durch die Überdeckung kann eine Gesamtauflösung erreicht werden, die feiner ist als die Fläche mehrerer Ausschnitte, die zeitgleich beleuchtet werden. Hierdurch können die Vorteile eines guten Signal-Rausch-Verhältnisses und einer guten Auflösung und damit ein gutes Auswerteergebnis einer Bildverarbeitung miteinander verbunden werden. Insbesondere werden die überdeckenden Muster in direkter Abfolge geschaltet. Zweckmäßigerweise ist die Steuereinheit dazu vorgesehen, eine ausschnittgroße Auflösung des Entfernungsbilds zu berechnen, wodurch eine hohe Informationsdichte erreicht werden kann.

Ein besonders gutes Signal-Rausch-Verhältnis kann erreicht werden, wenn die Muster die Form einer Hadamard-Matrix aufweisen. Hierdurch können viele Ausschnitte gemeinsam beleuchtet werden, wodurch ein hohes Signal-Rausch-Verhältnis erreichbar ist ― bei trotzdem erhaltener ausschnittgroßer Auflösung des Entfernungsbilds.

Eine besonders effektive Entfernungsmessung kann durch die Verwendung eines Infrarotsenders als Strahlungsquelle, insbesondere eines Infrarotlasers, erreicht werden.

Bezüglich des Verfahrens geht die Erfindung von einem Verfahren zur Entfernungsmessung aus, bei dem Strahlung aus einer Strahlungsquelle durch eine Sendeoptik in eine Objektszene gelenkt und aus von der Objektszene reflektierter und von einem Detektor empfangener Strahlung ein Entfernungsbild mit mehreren, jeweils unterschiedlichen Ausschnitten der Objektszene zugeordneten Bildelementen erzeugt wird. Es wird vorgeschlagen, dass die Strahlung aus der Strahlungsquelle erfindungsgemäß durch ein schaltbares Auswahlmittel in wechselnden Mustern in die Objektszene gerichtet wird. Es kann ein hoch aufgelöstes zweidimensionales Entfernungsbild mit einem kompakten und einfachen Entfemungsmessgerät erzeugt werden.

Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Entfernungsmessvorrichtung mit einem digitalen Spiegelgitter, das Licht aus einem Infrarotlaser ausschnittweise in eine Objektszene lenkt,
- Fig. 2: Diagramme von aus vier verschiedenen Mustern resultierenden Detektorsignalen,
- Fig. 3: ein vier Bildelemente umfassendes Entfernungsbild und
- Fig. 4: eine schematische Ansicht einer mit einem Muster in Form einer Hadamard-Matrix beleuchteten Objektszene.

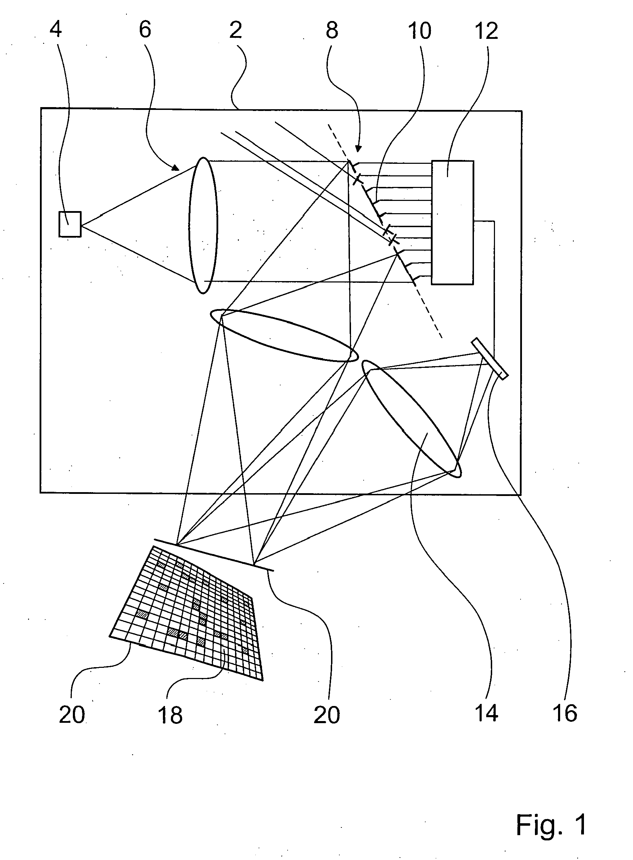

Figur 1 zeigt eine Entfernungsmessvorrichtung 2 mit einer als Infrarotlaser ausgebildeten Strahlungsquelle 4, einer Sendeoptik 6, die der Einfachheit halber in Form von zwei Linsen dargestellt ist, einem Auswahlmittel 8 in Form eines digitalen Spiegelgitters mit 32 x 32 Auswahlelementen 10 in Form von einzeln beweglichen Spiegelelementen, einer Steuereinheit 12, einer Empfängeroptik 14 und einem Detektor 16. Der Detektor 16 ist ein Einelementdetektor in Form einer Avalanche-Diode, wobei eine PIN-Diode oder ein Photonenvervielfacher ebenfalls denkbar sind. Die Steuereinheit 12 ist mit den Auswahlelementen 10 jeweils einzeln verbunden, die von der Steuereinheit 12 zwischen zwei möglichen Stellungen bewegt werden können: einer "Ein-Stellung", durch die Strahlung aus der Strahlungsquelle 4 in jeweils einen Ausschnitt 18 einer Objektszene 20 reflektiert wird, und einer "Aus-Stellung", durch die Licht aus der Strahlungsquelle 4 woandershin reflektiert wird. In Figur 1 sind drei Auswahlelemente 10 in ihrer "Aus-Stellung" und sieben Auswahlelemente 10 in ihrer "Ein-Stellung" gezeigt.

Die Sendeoptik 6 ist so ausgebildet, dass die Strahlung aus der Strahlungsquelle 4 alle Auswahlelemente 10 des Spiegelgitters beleuchtet. Das Licht aus der Strahlungsquelle 4 wird in einem von der Stellung der Auswahlelemente 10 abhängigen Muster in die Objektszene 20 gerichtet, wobei das Muster wechselbar und frei wählbar ist. Die aus der gesamten Objektszene 20 in die Empfängeroptik 14 einfallende, reflektierte Strahlung wird auf den Detektor 16 geführt, der die Strahlung misst und in Form eines einzigen Signals mit der Intensität I in Abhängigkeit von der Zeit t an die Steuereinheit 12 weitergibt. Das Muster in der Objektszene 20 ist in Figur 1 dargestellt, wobei schraffiert dargestellte Ausschnitte 18 nicht beleuchtet und nicht schraffierte Ausschnitte 18 von der Strahlungsquelle 4 beleuchtet sind.

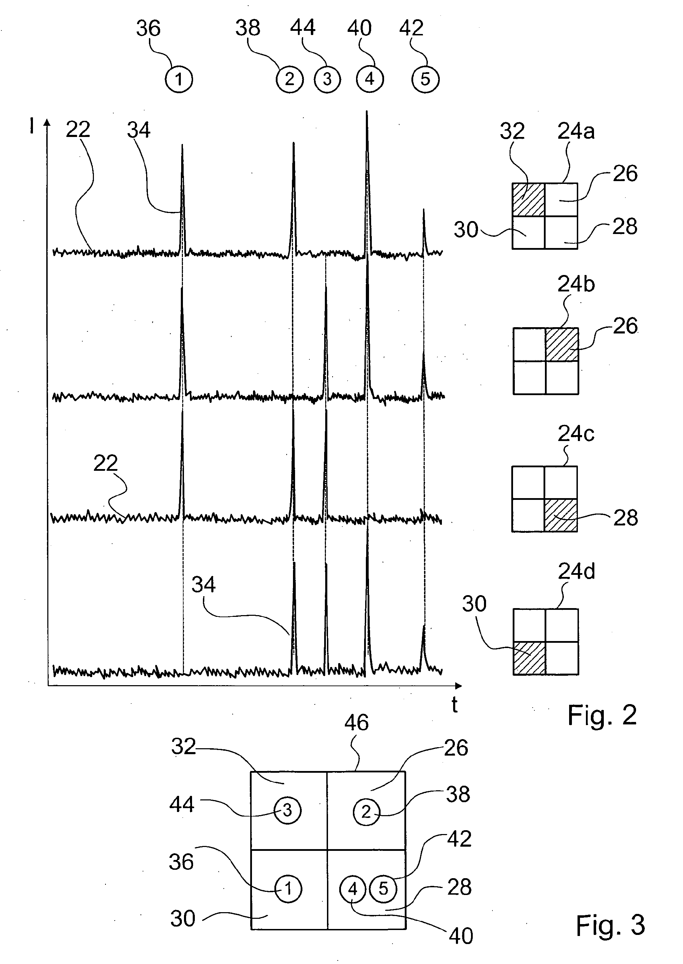

In Figur 2 ist das aus vier verschiedenen Mustern 24a-d resultierende Signal 22 der Intensität I über der Zeit t aufgetragen. Zur Entfernungsmessung wird zunächst ein Pulszug von dem Infrarotlaser über das digitale Spiegelgitter in einem ersten Muster 24a in die Objektszene 20 gerichtet. Ein kleiner Anteil der Strahlung wird von der Objektszene 20 reflektiert und erreicht die Empfängeroptik 14 und den Detektor 16. Durch ein nichtlineares Auswerteverfahren wird der reflektierte Pulszug derart "zusammengeschoben", dass eine Laufzeit des Pulszugs eindeutig einer Entfernung eines reflektierenden Objekts in der Objektszene 20 zugeordnet werden kann.

Die Muster 24a-d, die in Figur 2 dargestellt sind, umfassen der Übersichtlichkeit halber und zur Erläuterung des Verfahrens nur vier Ausschnitte 26, 28, 30, 32, wobei bei normaler Verwendung 32 x 32 oder noch mehr Ausschnitte realistisch sind. Bei dem ersten Muster 24a sind drei Ausschnitte 26, 28, 30 beleuchtet und ein Ausschnitt 32 ist abgeschattet, das entsprechende Auswahlelement 10 ist somit in "Aus-Stellung". Das resultierende Signal 22 ist im obersten Diagramm in Figur 2 dargestellt. Es zeigt vier Spitzen 34, die zeitlich hintereinander vom Detektor 16 registriert sind. Daraus kann geschlossen werden, dass in den Ausschnitten 26, 28, 30 vier Objekte 36, 38, 40, 42 vorhanden sind, die in einem unterschiedlichen Abstand zur Entfernungsmessvorrichtung 2 positioniert sind. Beispielsweise ist die Entfernung zum ersten Objekt 36 etwa 5 km, zum zweiten Objekt 38 etwa 7 km, zum dritten Objekt 40 etwa 8,5 km und zum entferntesten Objekt 42 etwa 10 km. Je weiter die Objekte 36, 38, 40, 42 von der Entfernungsmessvorrichtung 2 entfernt sind, desto später trifft der Reflex als Spitze 34 im Signal 22 ein.

Nach abgeschlossener Entfernungsmessung werden die Auswahlelemente 10 des Auswahlmittels 8 umgeschaltet, so dass ein weiteres Muster 24b in die Objektszene 20 eingestrahlt wird. In diesem Muster ist von den vier Ausschnitten 26, 28, 30, 32 lediglich der Ausschnitt 26 abgeschattet, so dass sich die beleuchteten Muster 24a, 24b überdecken. Die Spitzen 34 des Signals 22 unterscheiden sich im resultierenden Diagramm, das in Figur 2 an zweitoberster Stelle dargestellt ist, dadurch, dass ein weiteres Objekt 44 zwischen den Objekten 38 und 40 auftaucht. Dieses Objekt 44 ist beispielsweise 7,7 km von der Entfernungsmessvorrichtung 2 entfernt. Nun werden nachfolgend zwei weitere Entfernungsmessungen mit den Mustern 24c und 24d durchgeführt, bei denen wiederum jeweils nur ein Ausschnitt 28 bzw. 30 abgeschattet und die restlichen der vier Ausschnitte 26, 28, 30, 32 von der Strahlungsquelle 2 beleuchtet werden. Die resultierenden Signale 22 mit den Spitzen 34 sind in den beiden unteren Diagrammen in Figur 2 gezeigt.

Figur 3 zeigt ein entsprechendes Entfernungsbild 46, das aus den Ausschnitten 26, 28, 30, 32 zugeordneten Bildelementen zusammengesetzt ist. Aus der Anordnung der Spitzen 34 der vier Signalzüge des Signals 22 kann ermittelt werden, dass das Objekt 44 im Ausschnitt 32, das Objekt 38 im Ausschnitt 26, die beiden Objekte 40 und 42 im Ausschnitt 28 und das Objekt 36 im Ausschnitt 30 angeordnet ist. Durch die Überdeckung der Muster 24a-d kann somit eine ausschnittgroße Auflösung des Entfernungsbilds 46 berechnet werden. Zusätzlich zu der Anordnung der Objekte 36, 38, 40, 42, 44 in der Objektszene 20 wird durch die zeitliche Lage der Spitzen 34 auch deren Entfernung ermittelt, so dass zusätzlich zum zweidimensionalen Entfernungsbild auch die Raumkomponente des Entfernungsbilds erfasst wird.

Um ein besonders gutes Verhältnis zwischen dem in den Diagrammen dargestellten Rauschen und der Signalhöhe der Spitzen 34 zu erhalten, können die Signale 22 aller vier Diagramme addiert werden, so dass durch Signalkumulation das Rauschen nur unwesentlich zunimmt, wohingegen sich die Spitzen 34 addieren und somit zu einem deutlichen Signal führen. Hierdurch können auch sehr kleine Spitzen 34 in einem großen Rauschen erkannt und somit sehr kleine Objekte oder Objekte in einer sehr großen Entfernung detektiert werden.

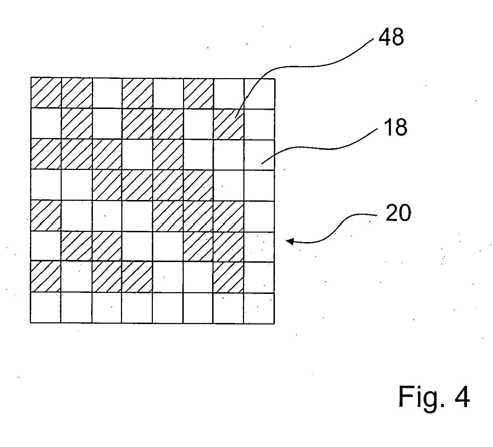

In Figur 4 ist eine weitere Objektszene 20 aus 8 x 8 Ausschnitten 18 dargestellt, wobei das Auswahlmittel 8 in diesem Beispiel aus 8 x 8 Spiegelelementen so geschaltet ist, dass 7 x 4 Spiegelelemente jeweils den ihnen zugeordneten (schraffiert gezeichneten) Ausschnitt 18 beleuchten. Die Spiegelelemente bzw. die Ausschnitte 18 sind in einem Muster 48 angeordnet, das einer aus der Mathematik bekannten Hadamard-Matrix entspricht. Diese zeichnet sich dadurch aus, dass in zwei benachbarten Zeilen oder Spalten die Hälfte der Ausschnitte 18 der zweiten Spalte in gleicher Stellung sind wie ihre benachbarten Ausschnitte 18 der ersten Spalte. Eine außen liegende L-förmige Anordnung von Ausschnitten 18 gleicher Schaltung ― wie in Figur 4 gezeigt ― kann hierbei von dieser Regel ausgenommen werden. Von dieser Art Schaltung sind N x N Anordnungen möglich, im Beispiel aus Figur 4 also 8 x 8 Hadamard-Matrizen, die sich jeweils durch nur sehr kleine Cluster von gleichgeschalteten Spiegelelementen auszeichnen. Auf diese Weise kann aus einer Anzahl von Schaltungen bzw. Anordnungen der Spiegelelemente optimal auf die Information eines einzigen Ausschnitts 18 zurückgerechnet werden, wodurch eine hohe Auflösung des Entfernungsbilds erzielt werden kann.

Bei der in Figur 4 gezeigten Schaltung wird beispielsweise reflektierte Strahlung von 28 Ausschnitten auf den Detektor 16 vereinigt, wodurch sehr weit entfernte Objekte mit einem sehr kleinen Reflexionssignal erfasst werden können. Durch die Anordnung der Ausschnitte jeweils in Form einer Hadamard-Matrix lässt sich sehr schnell, spätestens nach 8 x 8 Abbildungen, ein Entfernungsbild der Objektszene 20 mit einer ausschnittgroßen Auflösung berechnen.

In einem weiteren Verfahren wird als Muster jeweils eine Zeile von Ausschnitten 18 verwendet, und alle Zeilen der Objektszene 20 werden abgerastert. Anschließend wird eine Spalte von Ausschnitten 18 der Objektszene 20 ausgewählt und erneut die gesamte Objektszene 20 spaltenweise abgerastert. Hierdurch ist mit wenigen Messperioden eine hohe Auflösung des Entfernungsbilds der Objektszene 20 - verbunden mit einem guten Signal-Rausch-Verhältnis - erzielbar.

### Bezugszeichen

- 2: Entfernungsmessvorrichtung
- 4: Strahlungsquelle
- 6: Sendeoptik
- 8: Auswahlmittel
- 10: Auswahlelement
- 12: Steuereinheit
- 14: Empfängeroptik
- 16: Detektor
- 18: Ausschnitt
- 20: Objektszene
- 22: Signal
- 24a-d: Muster

- 26: Ausschnitt
- 28: Ausschnitt
- 30: Ausschnitt
- 32: Ausschnitt
- 34: Spitze
- 36: Objekt
- 38: Objekt
- 40: Objekt
- 42: Objekt
- 44: Objekt
- 46: Entfernungsbild
- 48: Muster

## Patentansprüche

1. Entfernungsmessvorrichtung (2) mit einer Strahlungsquelle (4), einer Sendeoptik (6) zur Ausrichtung von Strahlung aus der Strahlungsquelle (4) in eine Objektszene (20), einem Detektor (16) und einer Steuereinheit (12), die zu einer Erzeugung eines Entfernungsbilds aus Signalen (22) des Detektors (16) vorgesehen ist, wobei das Entfernungsbild mehrere, jeweils unterschiedlichen Ausschnitten (18) der Objektszene (20) zugeordnete Bildelemente umfasst,
**gekennzeichnet durch** ein schaltbares Auswahlmittel (8), **durch** das die Strahlung aus der Strahlungsquelle (4) in einem schaltbar wechselbaren Muster (24a-d, 48) in die Objektszene (20) richtbar ist.

2. Entfernungsmessvorrichtung (2) nach Anspruch 1,
**dadurch gekennzeichnet, dass** der Detektor (16) ein Einelementdetektor ist.

3. Entfernungsmessvorrichtung (2) nach Anspruch 1 oder 2,
**dadurch gekennzeichnet, dass** das schaltbare Auswahlmittel (8) ein digitales Spiegelgitter ist.

4. Entfernungsmessvorrichtung (2) nach einem der vorhergehenden Ansprüche,
**dadurch gekennzeichnet, dass** die Sendeoptik (6) zur Verteilung der Strahlung aus der Strahlungsquelle (4) gleichzeitig auf alle Auswahlelemente (10) des Auswahlmittels (8) vorgesehen ist.

5. Entfernungsmessvorrichtung (2) nach einem der vorhergehenden Ansprüche,
**dadurch gekennzeichnet, dass** die Steuereinheit (12) zur Schaltung des Auswahlmittels (8) derart vorgesehen ist, dass mehrere, jeweils einem Auswahlelement (10) des Auswahlmittels (8) zugeordnete Ausschnitte (18) der Objektszene (20) gleichzeitig von der Strahlungsquelle (4) beleuchtet werden.

6. Entfernungsmessvorrichtung (2) nach Anspruch 5,
**dadurch gekennzeichnet , dass** die Steuereinheit (12) dazu vorgesehen ist, die Anzahl der Ausschnitte (18) der Objektszene (20) in Abhängigkeit einer Eigenschaft des Entfernungsbilds einzustellen.

7. Entfernungsmessvorrichtung (2) nach Anspruch 5 oder 6,
**dadurch gekennzeichnet, dass** die Steuereinheit (12) dazu vorgesehen ist, die Ausschnitte (18) in Mustern (24a-d, 48) zu schalten, die sich teilweise überdecken.

8. Entfernungsmessvorrichtung (2) nach einem der Ansprüche 5 bis 7,
**dadurch gekennzeichnet , dass** die Steuereinheit (12) dazu vorgesehen ist, eine ausschnittgroße Auflösung des Entfernungsbilds zu berechnen.

9. Entfernungsmessvorrichtung (2) nach einem der Ansprüche 5 bis 8,
**dadurch gekennzeichnet , dass** die Muster (48) die Form einer Hadamard-Matrix aufweisen.

10. Entfernungsmessvorrichtung (2) nach einem der vorhergehenden Ansprüche,
**dadurch gekennzeichnet, dass** die Strahlungsquelle (4) ein Infrarotsender, insbesondere ein Infrarotlaser, ist.

11. Verfahren zur Entfernungsmessung, bei dem Strahlung aus einer Strahlungsquelle (4) durch eine Sendeoptik (6) in eine Objektszene (20) gelenkt wird und aus von der Objektszene (20) reflektierter und von einem Detektor (16) empfangener Strahlung ein Entfernungsbild mit mehreren, jeweils unterschiedlichen Ausschnitten (18) der Objektszene (20) zugeordneten Bildelementen erzeugt wird,
**dadurch gekennzeichnet , dass** die Strahlung aus der Strahlungsquelle (4) durch ein schaltbares Auswahlmittel (8) in wechselnden Mustern (24a-d, 48) in die Objektszene (20) gerichtet wird.
